Europäisches Patentamt

European Patent Office

Office européen des brevets

(11) Numéro de publication: **0 375 558 A1**

## (12) DEMANDE DE BREVET EUROPEEN

(21) Numéro de dépôt: **89403609.4**

(51) Int. Cl.5: **A21D 10/00**

(22) Date de dépôt: **21.12.89**

(30) Priorité: **23.12.88 FR 8817123**

(43) Date de publication de la demande:
**27.06.90 Bulletin 90/26**

(84) Etats contractants désignés:
**AT BE CH DE ES GB GR IT LI LU NL SE**

(71) Demandeur: **SA3P**
**1713, avenue Roger Salengro**
**F-92370 Chaville(FR)**

(72) Inventeur: **Nourigeon, André**
**135, Chemin de Clément**
**F-13270 Fos Sur Mer(FR)**

(74) Mandataire: **Armengaud Ainé, Alain**
**Cabinet ARMENGAUD AINE 3 Avenue**
**Bugeaud**
**F-75116 Paris(FR)**

(54) **Procédé de fabrication d'une farine prête à l'emploi et farine prête pour pâte ainsi obtenue.**

(57) Procédé de fabrication d'une farine composée prête à l'emploi en vue de la fabrication notamment de pâte à pain ou à pâtisserie, et autres spécialités boulangères et/ou pâtissières, caractérisé en ce qu' il consiste à :

a) préparer une farine complète des diverses céréales choisies obtenue par broyage desdites céréales sans addition d'eau, jusqu'à l'obtention d'une granulométrie de l'ordre de 40 à 200 $\mu$, le taux d'humidité étant inférieur à 9%.

b) préparer un activateur pour la levure, contenant notamment des enzymes, du levain, du malt, de l'acide ascorbique et/ou de l'acide citrique ou acétique ou gluten ou émulsifiant

c) préparer une levure sèche concentrée qui est enrobée d'un produit réhydratant et qui est conditionnée sous vide

d) ajouter ladite levure sèche et ledit activateur à la farine complète micronisée.

e) ajouter la farine blanche au mélange ainsi obtenu selon une proportion de 80 à 90% en poids comptés sur le produit finalement obtenu, et

f) conditionner sous vide la farine composée prête à l'emploi ainsi obtenue.

EP 0 375 558 A1

# PROCEDE DE FABRICATION D'UNE FARINE PRETE A L'EMPLOI ET FARINE PRETE POUR PATE AINSI OBTENUE

La présente invention a pour objet un procédé de fabrication de farines composées prêtes à l'emploi destinées notamment à la fabrication de pâtes à pain, à pâtisserie et autres spécialités boulangères.

A l'heure actuelle, les boulangers pâtissiers utilisent des farines dans la composition desquelles n'entre que le produit de base, c'est à dire de la farine blanche et de la farine complète des différentes céréales choisies. Il existe cependant des farines plus élaborées ou "composées", comportant les améliorants et correcteurs généralement utilisés en panification, tels que notamment des enzymes, du malt, de la lécithine, de l'acide ascorbique, du glutène, etc., l'utilisateur devant incorporer à ces farines composées les autres constituants, notamment la levure, le sel, l'eau, etc.

La présente invention se propose d'apporter un procédé de fabrication tout à fait original, permettant de livrer à l'utilisateur boulanger-pâtissier une farine composée complète, à laquelle il suffit simplement d'ajouter la quantité d'eau nécessaire avant de procéder au pétrissage de la pâte ainsi obtenue.

Un autre but de l'invention est de mettre à la disposition du boulanger pâtissier une farine composée prête à l'emploi, pouvant être stockée pendant une longue durée, (au moins deux ans), ce qui évite la nécessité de stocker plusieurs ingrédients dont les durées de conservation ne dépassent pas quelques mois. En outre, l'invention permet de diminuer dans des proportions significatives le temps de travail d'une pâte notamment d'un pâte à pain par réduction du temps de pétrissage et du cycle de fermentation et par suppression du temps de repos de la pâte.

En conséquence, cette invention a pour objet un procédé de fabrication d'une farine composée prête à l'emploi en vue de la fabrication notamment de pâte à pain à pâtisserie, et autres spécialités boulangères et/ou pâtissières caractérisé en ce qu'il consiste à :

a) préparer une farine complète des diverses céréales choisies obtenues par broyage desdites céréales sans addition d'eau, jusqu'à l'obtention d'une granulométrie de l'ordre de 40 à 200 $\mu$, le taux d'humidité étant inférieur à 9%.

b) préparer un activateur contenant notamment des enzymes, du levain, du malt, de l'acide ascorbique et/ou de l'acide citrique et/ou de l'acide acétique.

c) préparer une levure sèche concentrée qui est enrobée d'un produit réhydratant et qui est conditionnée sous vide.

d) ajouter ladite levure sèche et ledit activateur à la farine complète micronisée.

e) ajouter la farine blanche au mélange ainsi obtenu selon une proportion de 80 à 90% comptés sur le produit finalement obtenu, et

f) conditionner sous vide la farine composée prête à l'emploi ainsi obtenue.

La présente invention vise également la farine composée prête à l'emploi obtenue par la mise en oeuvre du procédé tel que défini ci-dessus, qui est conditionnée sous vide et qui présente la composition suivante exprimée en pourcentage en poids

| Farine blanche | 80 à 90 % |
| Farine complète des céréales choisies | 5 à 20 % |
| Levure sèche | 1 à 1,5 % |
| Activateur | 0,06 à 0,85 % |

Comme on le comprend, le procédé objet de l'invention comprend tout d'abord une étape de préparation d'une farine complète contenant les céréales choisies, lesquelles sont broyées à sec sans addition d'eau jusqu'à l'obtention d'une granulométrie de l'ordre de 40 à 200 $\mu$ ce qui permet d'obtenir une farine très sèche, présentant un taux d'humidité inférieur à 9 %. Cette farine micronisée de blé, seigle, avoine, maïs, orge, son, protéines d'algues ou autres est utilisée par exemple selon les pourcentages en poids ci-après :

| Pour une farine complète de blé | de 18 à 20 % |
|---|---|
| Pour une farine à 5 céréales | de 10 à 15 % |
| Pour une farine de campagne | de 5 à 10 % |
| Pour une semoule de blé dur | de 18 à 20 % |
| Pour une farine d'algue | de 10 à 12 % |

On prépare ensuite une levure sèche de boulangerie qui est un lait de levure fraîche concentrée dont la résistance thermique d'une seule faune subsiste après séchage sur une colonne de déshydratation (il s'agit de la saccharomyces cerviza) cette levure sèche étant ensuite enrobée dans un produit réhydratant et conditionnée sous vide avant son utilisation afin que le produit réhydratant ne puisse pas piéger l'eau environnante.

On prépare parallèlement un activateur pour cette levure, cet activateur étant utilisé selon une proportion comprise entre 60 et 560 grammes par kilo de levure sèche.

A titre d'exemple, on peut mentionner la composition pondérale ci-après, pour un kilo de levure sèche, d'un activateur utilisé selon la présente invention:

| Levain | 4 % |
|---|---|
| Esthers data | 0,40 % |
| Malt, lécithine, | 0,40 % |
| Amylases fongiques alpha et béta | entre 0,40 et 0,90 % |
| Acide ascorbique et/ou acide citrique et/ou acide acétique ou gluten | de 0,50 à 0,60 % |

Le rôle de cet activateur composé en partie d'enzymes est de permettre à la levure de fermenter en un temps record les amidons de la farine selon le cycle classique suivant :

Les amylases fongiques alpha détériorent les amidons en dextrines;

Les amylases béta détériorent les dextrines en dextroses et ;

Les maltoses de la levure détériorent les maltases en gaz fermentescibles.

On notera que cette formule (levure + activateur) selon la présente invention permet de rendre fermentescible un levain sec dévitalisé ou déshydraté en y ajoutant cette formule selon l'invention selon une proportion de 3 à 10 % en poids. Cette formule permet également de rendre fermentescibles les farines suivantes : (riz, tapioca, semoule de blé dur) malt, manioc, etc, et tous types de farines : alimentaires, comportant des additions de fruits frais et/ou de fruits secs ou de légumes frais et/ou secs et/ou de condiments frais ou secs.

Selon l'invention, on procède ensuite au mélange dans les proportions indiquées ci-dessus des céréales micronisées, de l'activateur et de la levure sèche à laquelle on a ajouté les ingrédients classiques utilisés en boulangerie ou en patisserie : sel, améliorants, sucre, matières grasses, oeufs, beurre, à l'exclusion de tout conservateur, colorant et autres produits chimiques de conservation.

On réalise ensuite un mélange intime du composé formule + céréales micronisées + levure sèche, avec la farine blanche, dans une proportion de 80 à 90 % en poids par rapport au produit final obtenu, ce qui permet d'obtenir la farine composée prête à l'emploi selon la présente invention qui est immédiatement remise sous vide.

En ce qui concerne le matériau dans lequel sont conditionnées les farines selon l'invention, on utilisera de préférence des sacs en polypropylène résistant à un vide de l'ordre de 2 bars (la valeur du vide utilisé lors du conditionnement étant de 25 M$^3$ par heure), ceci afin d'assurer une durée de conservation de l'ordre de 2 ans.

La caractéristique selon l'invention qui consiste à stocker la farine composée prête à l'emploi sous vide apporte les avantages suivants :

On évite une détérioration résultant de l'air ambiant ;

On préserve la valeur fermentative de la farine ;

On peut prolonger la durée de stockage en parfaite conservation jusqu'à une période d'au moins deux ans ;

On facilite la tâche des utilisateurs, notamment en ce sens que les différentes manipulations permettent de respecter intégralement les qualités organo-leptiques du produit de boulangerie ou de pâtisserie finalement obtenu, tel que le veut la tradition en la matière.

On comprend qu'outre les avantages mentionnés ci-dessus résultant du stockage sous vide, l'invention permet d'obtenir une réduction du temps de mise en oeuvre par le boulanger ou le pâtissier, étant donné que celui-ci dispose d'une farine composée prête à l'emploi à laquelle il lui suffit simplement d'ajouter la quantité d'eau nécessaire à la préparation de la pâte.

En effet, à l'heure actuelle, le boulanger, pour préparer par exemple un pain de seigle, doit exécuter les opérations successives suivantes :

a) Peser la farine blanche,

b) Peser la farine de seigle,

c) Peser le sel

d) Peser la levure

e) Peser les divers améliorants et correcteurs de la farine, ce qui se traduit par au moins trois manipulations

f) Peser l'eau de coulage. alors que en utilisant la farine composée selon l'invention, il suffit simplement de :

a) Peser la farine composée prête à l'emploi

b) Peser l'eau de coulage.

On comprend qu'un autre avantage apporté par l'invention réside dans la diminution des erreurs de dosage et, bien entendu, dans la diminution du temps de mise en oeuvre. Par ailleurs, l'invention permet d'obtenir un meilleur rendement du produit étant donné que celui-ci est partiellement déshydraté (il comporte une quantité d'eau inférieure à 10 % en poids), ce qui permet de rajouter 10 % d'eau supplémentaire permettant d'obtenir une meilleure quantité de pâte.

Par exemple, pour une farine traditionnelle du commerce, on ajoute à 100 Kilos de farine classique 60 % d'eau, ce qui donne 160 kilos de pâte, alors que, pour une farine composée prête à l'emploi selon l'invention, on ajoute à 100 kilos d'une telle farine 70 % d'eau, ce qui permet d'obtenir 170 kilos de pâte.

Un autre avantage apporté par la présente invention réside dans la diminution du temps de travail de la pâte. En effet, grâce à l'invention le temps de pétrissage est ramené à 10 minutes au lieu des 20 minutes nécessaires dans la mise en oeuvre d'une farine classique du commerce. Le temp de repos de la pâte est supprimé. Le temps de fermentation est de 50 minutes. Ainsi, la durée totale d'exécution de la pâte est de 60 minutes alors qu'avec une farine classique, la durée d'exécution du même produit est de 2 heures et 30 minutes.

Enfin, on notera que grâce à l'invention, il est inutile de stocker plusieurs ingrédients différents, d'avoir à les peser et en outre le boulanger peut conserver sa farine composée prête à l'emploi le temps nécessaire (plusieurs mois) pour la comercialiser sans contrainte et sans soucis de conservation, ce qui améliore la rotation des stocks. Il demeure bien entendu que la présente invention n'est pas limitée aux différents modes de mise en oeuvre mentionnés ci-dessus mais qu'elle en englobe toutes les variantes.

## Revendications

1- Procédé de fabrication d'une farine composée prête à l'emploi en vue de la fabrication notamment de pâte à pain ou à pâtisserie, et autres spécialités boulangères et/ou pâtissières, caractérisé en ce qu'il consiste à :

a) préparer une farine complète des diverses céréales choisies obtenue par broyage desdites céréales sans addition d'eau, jusqu 'à l'obtention d'une granulométrie de l 'ordre de 40 à 200 $\mu$, le taux d'humidité étant inférieur à 9%.

b) préparer un activateur pour la levure, contenant notamment des enzymes, du levain, du malt, de l'acide ascorbique et/ou de l'acide citrique ou acétique ou gluten ou émulsifiant

c) préparer une levure sèche concentrée qui est enrobée d'un produit réhydratant et qui est conditionnée sous vide

d) ajouter ladite levure sèche et ledit activateur à la farine complète micronisée.

e) ajouter la farine blanche au mélange ainsi obtenu selon une proportion de 80 à 90% en poids comptés sur le produit finalement obtenu, et

f) conditionner sous vide la farine composée prête à l'emploi ainsi obtenue.

2- Farine composée prête à l'emploi obtenue par la mise en oeuvre du procédé selon la revendication 1, caractérisée en ce qu'elle est conditionnée sous vide et en ce qu'elle présente la composition suivante :

| Farine blanche | 80 à 90 % |
|---|---|
| Farine complète des céréales choisies | 5 à 20 % |
| Levure sèche | 1 à 1,5 % |
| Activateur | 0,06 à 0,85% |

3- Activateur pour levure entrant dans la composition d'une farine selon la revendication 2, caractérisé en ce qu'il comprend notamment pour 1 kilo de levure sèche :

| Levain | 4 % |
|---|---|
| Esthers data | 0,40 % |
| Malt, lécithine | 0,40 % |
| Amylases fongiques alpha et béta | de 0,40 à 0,90 % |
| Acide ascorbique et/ou acétique et/ou citrique et/ou gluten | de 0,50 % à 0,60 % |

4- Farine composée selon la revendication 2, caractérisée en ce que la levure sèche entrant dans sa composition est un lait de levure fraîche concentrée dont la résistance thermique d'une seule faune subsiste après séchage sur colonne de déshydratation, cette faune étant la saccharomyces cerviza, cette levure sèche étant reconditionnée sous vide avant son incorporation dans ladite farine composée.

5- Farine composée selon l'une quelconque des revendications 2 à 4, caractérisée en ce qu'elle est conditionnée dans des sacs en polypropylène, résistant à un vide de 2 bars.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 509 676  (M. PENNA)<br>* Résumé *<br>--- | 1 | A 21 D   10/00 |
| A | GB-A-2 009 583  (PATENT TECHNOLOGY INC.)<br>* Revendications; page 4, lignes 91-109; page 5, lignes 7-30 *<br>--- | 1 | |
| Y | GB-A-1 247 159  (THE PROCTER & GAMBLE CO.)<br>* Revendications *<br>--- | 1,2,3 | |
| Y | FR-A-2 315 852  (DIAMALT AG)<br>* Revendications 1,6; page 2, alinéa 4; page 3, alinéa 3; examples *<br>--- | 1,2,3 | |
| Y | FR-A-2 054 712  (L. LEMOINE)<br>* Revendications *<br>--- | 1,2,3 | |
| A | EP-A-0 279 496  (J. VAN HERPE)<br>* Revendications *<br>----- | 1 | |

DOMAINES TECHNIQUES
RECHERCHES (Int. Cl.5)

A 21 D

Le présent rapport a été établi pour toutes les revendications

| Lieu de la recherche | Date d'achèvement de la recherche | Examinateur |
|---|---|---|
| LA HAYE | 30-01-1990 | COUCKE A.O.M. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons
 
& : membre de la même famille, document correspondant

EPO FORM 1503 03.82 (P0402)